# DEMANDE DE BREVET EUROPEEN

(11) **EP 2 980 518 A1**
(43) Date de publication de la demande: **03.02.2016**
(21) Numéro de dépôt: 15178153.1
(22) Date de dépôt: 23.07.2015
(51) Int. Cl.: F28F 3/02, F28D 1/03, F28D 9/00, F28D 20/02, F28D 20/00

(54) **DISPOSITIF D'ECHANGE DE CHALEUR COMPRENANT UN PREMIER ECHANGEUR DE CHALEUR ET UN DEUXIEME ECHANGEUR DE CHALEUR**

(30) Priorité: 29.07.2014 FR 1457312
(71) Demandeur: VALEO SYSTEMES THERMIQUES, 78320 Le Mesnil Saint-Denis (FR)
(72) Inventeur: AZZOUZ, Kamel, 75012 PARIS (FR)
(74) Mandataire: Metz, Gaëlle

(57) **Abrégé**

Dispositif d'échange de chaleur pour échanger de la chaleur avec un fluide, ledit dispositif comprenant un conteneur et étant adapté pour échanger de la chaleur avec un fluide afin de refroidir ledit fluide, et ledit dispositif comprenant un premier échangeur de chaleur comprenant au moins une première entrée pour le fluide, et un deuxième échangeur de chaleur comprenant un composant statique pour échanger de la chaleur avec le fluide, le composant statique étant adapté pour stocker et libérer une quantité déterminée de chaleur afin de permettre un échange de chaleur entre le fluide et le composant statique, le deuxième échangeur de chaleur comprenant au moins une deuxième entrée pour ledit fluide, le dispositif d'échange de chaleur comprenant des moyens de régulation permettant de réguler la quantité de fluide transmise vers la première entrée du premier échangeur de chaleur et la deuxième entrée du deuxième échangeur de chaleur.

## Description

### Domaine de l'invention

La présente invention concerne un dispositif d'échange de chaleur, par exemple un échangeur de chaleur destiné à un véhicule automobile. Plus précisément, l'invention concerne un échangeur de chaleur adapté pour être intégré dans un circuit d'huile, par exemple le circuit de l'huile de la boîte de vitesse automatique ou encore le circuit de l'huile de moteur.

Le dispositif d'échange de chaleur selon l'invention permet, plus précisément, un échange de chaleur avec un fluide, tel que l'huile de la boîte de vitesse, afin de refroidir ledit fluide et, de façon simultanée, de stocker et de réserver une quantité déterminée de chaleur dans le but d'aider à l'augmentation de la température dudit fluide, après une période pendant laquelle le fluide n'a pas été utilisé et pour lequel la température a pu descendre en dessous d'un seuil de température lors du démarrage à froid d'un véhicule automobile.

### Etat de la technique

Un échangeur de chaleur, utilisé dans l'industrie automobile, et plus précisément un échangeur de chaleur adapté pour refroidir de l'huile telle que de l'huile de moteur ou de l'huile de boîte de vitesse automatique comprend, en règle générale, un boîtier ou carter comportant, en son intérieur, des éléments d'échange de chaleur permettant l'échange de chaleur de l'huile de moteur ou de l'huile de boîte de vitesse, et un deuxième composant tel qu'un fluide. Ces éléments d'échange de chaleur peuvent, par exemple, comporter une pluralité de tubes.

Les tubes, situés à l'intérieur d'un échangeur de chaleur, peuvent être présents au sein d'un faisceau d'échange et disposés de façon essentiellement parallèle, les uns par rapport aux autres. Les tubes peuvent être positionnés sur une rangée ou plusieurs rangées parallèles entre elles. Les tubes permettent de guider le premier fluide, tel que l'huile de moteur ou l'huile de boîte de vitesse, à l'intérieur desdits tubes, d'une première entrée pour ce premier fluide vers une première sortie associée audit premier fluide.

Afin de permettre l'échange de chaleur entre un premier fluide, tel que l'huile de moteur ou l'huile de boîte de vitesse, et un deuxième composant, par exemple un deuxième fluide, les tubes utilisés pour guider le premier fluide depuis son entrée vers sa sortie, sont positionnés de manière adjacente au deuxième composant pour permettre audit deuxième composant d'échanger de la chaleur avec le premier fluide.

La température de l'huile de moteur ou de l'huile de boîte de vitesse automatique influence de manière non négligeable la consommation en carburant du véhicule automobile pendant le fonctionnement du moteur ou de la boîte de vitesse automatique dudit véhicule automobile.

Ainsi, par exemple, le démarrage à froid d'un moteur à combustion interne constitue, à ce jour, un point faible sur le cycle européen de référence ou nouveau cycle européen de conduite (New European Driving Cycle NEDC1). En effet, la surconsommation de carburant lors du démarrage à froid y a évolué entre 15% et 20%, couplée à un rejet de polluant de type Hydrocarbure. Cette surconsommation s'explique, notamment, par l'existence d'un grand nombre de frottements, lors du démarrage à froid, entre les éléments du moteur et les éléments de la boîte de vitesse automatique dans la mesure où la température de l'huile de moteur ou de l'huile de boîte de vitesse automatique est en cours d'augmentation pour parvenir une température d'utilisation optimale.

Dans l'art antérieur, plusieurs solutions permettant d'augmenter la température de l'huile de moteur ou de l'huile de boîte de vitesse automatique après le démarrage à froid d'un moteur sont proposées et ce, afin de limiter le délai pendant lequel le moteur est contraint de fonctionner en mode de surconsommation de carburant.

Ainsi, la plupart des solutions connues de l'art antérieur nécessitent l'utilisation de pièces supplémentaires pour augmenter la température de l'huile de moteur immédiatement après le démarrage à froid dudit moteur. Cependant, l'ajout de ces pièces nécessite un volume spécifique au sein du compartiment du moteur du véhicule automobile. Ainsi, l'implémentation de telles pièces n'est pas toujours réalisable compte tenu des marges de fabrication disponibles.

Il apparaît que des améliorations, permettant de limiter en particulier les frottements présents dans la boîte de vitesse automatique durant la phase d'augmentation de la température de l'huile utilisée dans la boîte de vitesse, s'avèrent nécessaires afin de limiter la surconsommation de carburant.

### Objet de l'invention

Le dispositif d'échange de chaleur selon la présente invention vise à améliorer le contrôle de la température d'un fluide, plus particulièrement l'huile d'un circuit d'huile d'une boîte de vitesse automatique, et à offrir, simultanément, la possibilité de stocker une quantité déterminée de chaleur afin d'augmenter la température dudit fluide lors du démarrage à froid du moteur d'un véhicule automobile, tout en garantissant un volume relativement compact dudit dispositif d'échange de chaleur.

A cet effet, la présente invention concerne un dispositif d'échange de chaleur pour échanger de la chaleur avec un fluide, ledit dispositif comprenant un conteneur et étant adapté pour échanger de la chaleur avec un fluide afin de refroidir ledit fluide, et ledit dispositif d'échange de chaleur comprenant un premier échangeur de chaleur comprenant au moins une première entrée pour le fluide, et un deuxième échangeur de chaleur comprenant un composant statique pour échanger de la chaleur avec le fluide, le composant statique étant adapté pour stocker et libérer une quantité déterminée de chaleur afin de permettre un échange de chaleur entre le fluide et le composant statique, le deuxième échangeur de chaleur comprenant au moins une deuxième entrée pour ledit fluide, le dispositif d'échange de chaleur comprenant des moyens de régulation permettant de réguler la quantité de fluide transmise vers la première entrée du premier échangeur de chaleur et la deuxième entrée du deuxième échangeur de chaleur.

Tout d'abord, le dispositif d'échange de chaleur selon la présente invention offre la possibilité d'utiliser un seul dispositif disposant d'au moins deux fonctionnalités. La première fonctionnalité consiste à réguler la température d'un fluide tel que l'huile présente au sein d'un circuit d'huile de boîte de vitesse automatique, tout en permettant le refroidissement dudit fluide à l'aide d'un premier échangeur de chaleur adapté.

Ensuite, le dispositif d'échange de chaleur comporte un deuxième échangeur de chaleur adapté pour stocker et libérer une quantité déterminée de chaleur afin de permettre, par exemple, de stocker une quantité déterminée de chaleur pendant l'utilisation normale du fluide tel que de l'huile présente au sein d'un circuit d'huile de boîte de vitesse automatique et libérer cette quantité déterminée de chaleur pour augmenter la température dudit fluide, par exemple lors d'un démarrage à froid du moteur d'un véhicule automobile.

Selon l'invention, le dispositif d'échange de chaleur comprend un dispositif de régulation ou des moyens de régulation. Ce dispositif de régulation est adapté pour transmettre une quantité déterminée de fluide pour lequel un échange de chaleur est requis vers le premier échangeur de chaleur et une deuxième quantité de fluide vers le deuxième échangeur de chaleur.

La quantité de fluide transmise au premier et au deuxième échangeur de chaleur dépend, par exemple, de la température de référence associée à un déroulement optimal d'un cycle au cours duquel ledit fluide est utilisé. Par exemple, au début d'un cycle, la répartition de la quantité de fluide entre le premier et le deuxième échangeur de chaleur est telle qu'un pourcentage de fluide plus important peut être transmis vers le premier échangeur de chaleur et, plus tard, au cours du même cycle, un pourcentage de fluide peut être envoyé vers le deuxième échangeur de chaleur.

Selon un mode de réalisation de l'invention, le premier et le deuxième échangeur de chaleur sont positionnés au sein dudit dispositif d'échange de chaleur, soient séparés à l'aide d'un élément d'isolation.

Selon un mode de réalisation de l'invention, le conteneur comprend une paroi extérieure isolée.

Selon un mode de réalisation de l'invention, la paroi extérieure du conteneur comprend un premier et un deuxième élément entre lesquels se trouve un espace vide.

Selon un mode de réalisation de l'invention, le deuxième échangeur de chaleur comprend un faisceau d'échange comprenant au moins un premier conduit pour guider le premier composant dynamique d'une première entrée vers une première sortie, le composant statique étant adjacent audit premier conduit et positionné à l'intérieur dudit faisceau d'échange, ledit composant statique étant adapté pour stocker et libérer une quantité déterminée de chaleur afin de permettre un échange de chaleur entre le premier composant dynamique et le composant statique.

Selon un mode de réalisation de l'invention, le premier composant dynamique comprend un fluide.

Selon un mode de réalisation de l'invention, le composant statique comprend un matériau à changement de phase (MCP).

Selon un mode de réalisation de l'invention, la température de changement de phase du matériau à changement de phase (MCP) est comprise entre 60°C et 95°C, préférablement entre 70°C et 90°C.

Selon un mode de réalisation de l'invention, le matériau à changement de phase comprend un eutectique.

Selon un mode de réalisation de l'invention, le faisceau d'échange comprend au moins un deuxième conduit pour guider un deuxième composant dynamique d'une deuxième entrée vers une deuxième sortie, ledit deuxième conduit étant adjacent au premier conduit pour guider le premier composant dynamique de la première entrée vers la première sortie, et positionné à l'intérieur du faisceau d'échange pour permettre un échange de chaleur entre le premier composant dynamique et le deuxième composant dynamique.

Selon un mode de réalisation de l'invention, lesdits premiers et deuxièmes conduits pour guider respectivement le premier composant dynamique et le deuxième composant dynamique sont positionnés pour permettre une circulation du premier composant dynamique à contre-courant de la circulation du deuxième composant dynamique.

Selon un mode de réalisation de l'invention, le faisceau d'échange de chaleur comprend une première zone (A ; AA) pour permettre l'échange de chaleur entre le premier composant dynamique et le composant statique, et une deuxième zone (B, C ; BB ; CC) pour permettre l'échange de chaleur entre le premier composant dynamique et le deuxième composant dynamique.

Selon un mode de réalisation de l'invention, le deuxième échangeur de chaleur comprend un faisceau d'échange comprenant au moins un premier conduit pour guider le premier composant dynamique d'une première entrée vers une première sortie, le composant statique adjacent audit conduit étant positionné à l'intérieur dudit faisceau, ledit composant statique étant adapté pour stocker et libérer une quantité déterminée de chaleur afin de permettre un échange de chaleur entre le premier composant dynamique et le composant statique, dans lequel le faisceau d'échange comprend ainsi au moins un deuxième conduit pour guider un deuxième composant dynamique d'une deuxième entrée vers une deuxième sortie, ledit deuxième conduit étant adjacent au premier conduit pour guider le premier composant dynamique de la première entrée vers la première sortie et positionné à l'intérieur dudit faisceau d'échange et permettre ainsi un échange de chaleur entre le premier et le deuxième composant dynamique.

### Brève descriptions des dessins

Les but, objet et caractéristiques de la présente invention ainsi que ses avantages apparaîtront plus clairement à la lecture de la description ci-dessous, des modes de réalisation préférés d'un échangeur de chaleur selon l'invention, faite en référence aux dessins dans lesquels :
- la figure 1 montre une représentation schématique d'une boucle de refroidissement intégrant un dispositif d'échange de chaleur selon l'art antérieur,
- la figure 2 représente une vue schématique d'une boucle de refroidissement intégrant un dispositif d'échange de chaleur selon un mode de réalisation de l'invention,
- la figure 3 représente un premier mode de réalisation d'un dispositif d'échange de chaleur selon l'invention,
- la figure 4 montre en détail, selon une perspective éclatée, un premier mode de réalisation d'un deuxième échangeur de chaleur et/ou d'un premier échangeur de chaleur,
- la figure 5 représente une vue, en perspective éclatée, d'un deuxième mode de réalisation du deuxième échangeur de chaleur selon la présente invention, et
- la figure 6 montre une vue, en perspective éclatée d'un troisième mode de réalisation du deuxième échangeur de chaleur selon la présente invention.

### Description détaillée des modes de réalisation

La description détaillée ci-après a pour but d'exposer l'invention de manière suffisamment claire et complète, notamment à l'aide d'exemples, mais ne doit en aucun cas être regardée comme limitant l'étendue de la protection aux modes de réalisation particuliers et aux exemples présentés ci-après.

L'invention concerne un dispositif d'échange de chaleur adapté pour permettre un échange de chaleur avec un fluide. Pour effectuer cet échange de chaleur, le dispositif d'échange de chaleur selon l'invention comprend différents éléments et permet différents procédés décrits ci-dessous.

Dans la présente description, le terme « composant » est utilisé pour faire référence à tout matériau adapté pour stocker une quantité de chaleur déterminée et échanger de la chaleur avec un autre composant.

L'expression « composant dynamique » est utilisée pour faire référence à un matériau, tel qu'un fluide, capable de se déplacer d'une première position vers une deuxième position, par exemple pour se déplacer par rapport à un autre composant, permettant ainsi un échange de chaleur entre le composant dynamique et l'autre composant.

L'expression « composant statique » est utilisée pour faire référence à un matériau adapté pour occuper une même position pendant un éventuel échange de chaleur avec un autre composant.

Au sein de la présente description, le mode de réalisation préféré fait référence au refroidissement d'une huile présente au sein d'un circuit d'huile, tel que le circuit d'huile de la boîte de vitesse automatique d'un véhicule automobile.

Cette limitation représente seulement un exemple d'application de l'objet de l'invention.

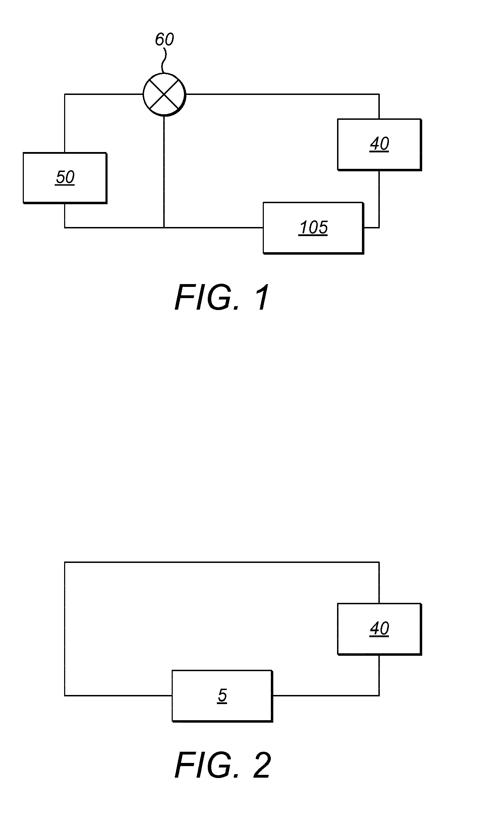

La figure 1 représente, de façon schématique, un circuit ou une boucle de refroidissement pour refroidir l'huile utilisée au sein d'une boîte de vitesse automatique selon l'art antérieur d'un véhicule automobile. Selon la figure 1, la boucle de refroidissement comprend une pompe (non montrée), un échangeur de chaleur 105, un échangeur de chaleur 50 adapté pour refroidir l'huile, un moyen de régulation 60 d'un fluide telle qu'une valve 60 pour réguler la quantité de fluide et une boîte de vitesse automatique 40.

Au cours d'un cycle de refroidissement, l'huile présentant une température déterminée est guidée à partir de la boîte de vitesse automatique 40 en direction de l'échangeur de chaleur 105.

L'échangeur de chaleur 105 est utilisé tout d'abord pour refroidir l'huile et, ensuite, pour stocker une quantité déterminée de chaleur à l'intérieur dudit échangeur de chaleur 105. Si nécessaire, l'huile peut être refroidie lors d'une étape complémentaire grâce à un échangeur de chaleur 50 pouvant être tout type d'échangeur de chaleur de l'art antérieur adapté pour refroidir de l'huile. La quantité d'huile circulant respectivement à l'intérieur de l'échangeur de chaleur 105 est régulée grâce à la valve 60.

Il convient de noter que l'échangeur de chaleur 105, selon la figure 1, présente deux fonctionnalités. La première fonctionnalité permet d'utiliser l'échangeur de chaleur 105 en combinaison avec l'échangeur de chaleur 50 afin de refroidir l'huile présente au sein du circuit d'huile de la boîte de vitesse automatique 40. La deuxième fonctionnalité permet à l'échangeur de chaleur 105 de stocker une quantité déterminée de chaleur pouvant être libérée lors de l'utilisation de la boîte de vitesse automatique 40, par exemple lors du démarrage à froid du moteur du véhicule automobile.

La boucle de refroidissement selon la figure 1 offre ainsi des fonctions combinées qui permettent, d'une part, le refroidissement de l'huile présente au sein du circuit d'huile et, d'autre part, l'optimisation de l'augmentation de la température de l'huile si nécessaire. Ces fonctions combinées permettent notamment de réduire la consommation de carburant du véhicule automobile.

Il convient de noter que lors de l'utilisation de la boîte de vitesse automatique 40, l'huile circule toujours à travers l'échangeur de chaleur 105 et, éventuellement, à travers l'échangeur de chaleur 50. En d'autres termes, dans le cas où l'utilisateur souhaite, lors de l'utilisation du système de refroidissement tel que montré sur la figure 1, utiliser seulement la fonctionnalité de l'échangeur de chaleur 50, l'huile circule tout de même au travers de l'échangeur de chaleur 105.

Par ailleurs, comme montré sur la figure 1, la boucle de refroidissement selon l'art antérieur comprend la boîte de vitesse automatique 40, et au minimum les trois éléments 40, 105 et 50 ainsi qu'un certain nombre de tuyaux permettant la réalisation des différentes fonctionnalités.

La figure 2 montre une boucle de refroidissement comprenant le dispositif d'échange de chaleur 5 selon l'invention. Selon la figure 2, la boîte de vitesse automatique 40 est connectée à un unique dispositif d'échange de chaleur 5 à l'intérieur duquel sont disposés tous les moyens nécessaires permettant d'obtenir les fonctionnalités souhaitées avec la boucle de refroidissement.

En d'autres termes, le dispositif d'échange de chaleur 5 est capable, de façon autonome, de refroidir l'huile présente au sein du circuit d'huile de la boîte de vitesse automatique 40, de stocker une quantité déterminée de chaleur au sein dudit dispositif d'échange de chaleur 5, de libérer cette chaleur si nécessaire afin d'augmenter la température de ladite huile et de déterminer la répartition de la quantité d'huile à transmettre au sein du dispositif d'échange de chaleur.

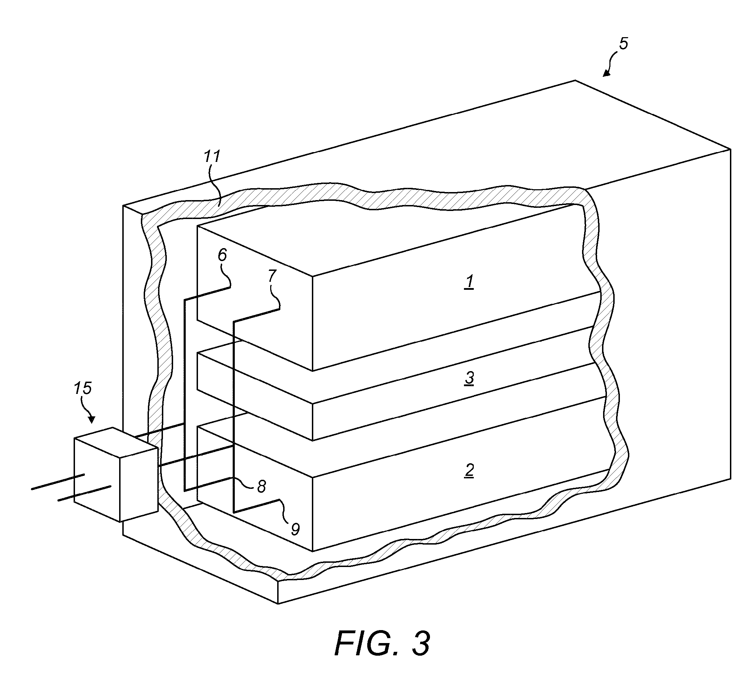

La figure 3 représente, de façon schématique, un dispositif d'échange de chaleur 5 selon l'invention. Le dispositif d'échange de chaleur 5 comprend un conteneur 11, partiellement représenté afin de laisser apparaître l'intérieur du dispositif d'échange de chaleur 5.

Le conteneur 11 comporte, en son intérieur, un premier échangeur de chaleur 1 et un deuxième échangeur de chaleur 2. Les premier et deuxième échangeurs de chaleur sont séparés par un élément d'isolation 3. Le premier échangeur de chaleur 1 a pour première fonction de permettre un échange de chaleur avec un fluide, tel que de l'huile présente au sein d'un circuit d'huile, afin de refroidir ledit fluide. Pour permettre cette fonctionnalité, le premier échangeur de chaleur 1 dispose d'au moins une première entrée 6 et d'une première sortie 7. Comme décrit ci-dessus, le premier échangeur de chaleur 1 permet également un échange de chaleur entre le fluide et un liquide de refroidissement tel que de l'eau glycolée.

Le deuxième échangeur de chaleur 2 a pour première fonction de permettre un échange de chaleur avec un fluide, tel que de l'huile présente au sein d'un circuit d'huile, afin de stocker une quantité déterminée de chaleur à l'intérieur dudit deuxième échangeur de chaleur 2. Afin de permettre cette fonctionnalité, le deuxième échangeur de chaleur 2 est pourvu d'au moins une deuxième entrée 8 et d'une deuxième sortie 9.

Les différentes entrées 6, 8 et sorties 7, 9 sont connectées à un dispositif de régulation 15 ou à des moyens de régulation 15, adapté pour réguler la quantité de fluide qui alimente soit le premier échangeur de chaleur 1 soit le deuxième échangeur de chaleur 2. La quantité de fluide qui alimente chacun des premier et deuxième échangeurs de chaleur 1, 2 dépend de la température dudit fluide pénétrant à l'intérieur du dispositif d'échange de chaleur 5, de la température de référence du fluide, c'est-à-dire de la température associée à un fonctionnement optimal du dispositif d'échange de chaleur 5 et des étapes à effectuer pour parvenir à la température de référence dudit fluide. Si la température du fluide est supérieure à la température de référence, une première quantité déterminée du fluide peut être transmise au premier échangeur de chaleur 1 afin d'assurer la baisse de ladite température. La diminution de la température peut, par exemple, être réalisée grâce à un échange de chaleur avec un fluide de refroidissement tel que de l'eau glycolée. Une deuxième quantité peut être envoyée vers le deuxième échangeur de chaleur 2 afin de stocker une quantité déterminée de chaleur, à l'intérieur dudit deuxième échangeur de chaleur 2, en vue d'une utilisation ultérieure de ladite quantité de chaleur.

Si la température du fluide pénétrant à l'intérieur du dispositif d'échange de chaleur 5 est inférieure à la température de référence, une quantité déterminée de fluide peut être transmise au deuxième échangeur de chaleur 2 afin de permettre l'utilisation, à l'intérieur dudit deuxième échangeur de chaleur 2, d'une quantité déterminée de chaleur stockée à l'intérieur du deuxième échangeur de chaleur 2 et ce afin d'augmenter la température du fluide.

Afin de permettre un fonctionnement optimal du dispositif d'échange de chaleur 5 selon la figure 3, le premier échangeur de chaleur 1 peut comporter un faisceau d'échange connu selon l'art antérieur pour permettre un échange de chaleur entre le fluide et un fluide de refroidissement.

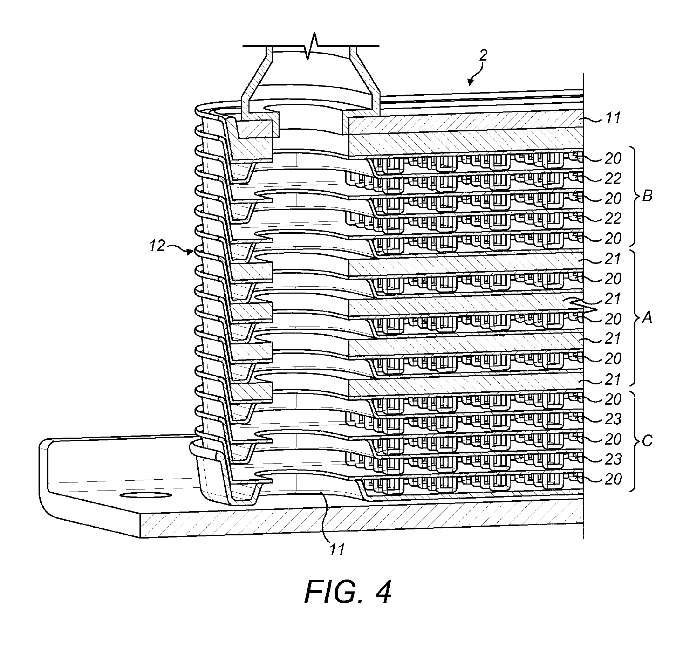

La figure 4 montre dans une vue en perspective éclatée une partie du deuxième échangeur de chaleur 2 selon un premier mode de réalisation de l'invention. La figure 4 divulgue seulement une partie de l'échangeur de chaleur 2. Le deuxième échangeur de chaleur 2 comprend un faisceau d'échange 12, ledit faisceau d'échange 12 comprenant plusieurs éléments permettant l'échange de chaleur entre au moins un premier composant et un deuxième composant.

Ainsi, selon la figure 4, le faisceau d'échange 12 comporte des premiers éléments 20 ou premiers conduits 20 adaptés pour guider un premier composant ou premier composant dynamique, tel qu'un fluide, depuis une entrée relative audit premier composant vers une sortie relative audit premier composant. Les premiers conduits 20 correspondent à des espaces qui peuvent être obtenus grâce à un empilement de plaques permettant de créer une structure modulaire. Dans ces plaques, lesdits espaces sont formés par l'espace libre situé entre deux plaques adjacentes. Dans l'art antérieur, une structure de ce type est connue afin de permettre un échange de chaleur au sein d'un dispositif d'échange de chaleur.

De plus, le faisceau d'échange 12 comprend des deuxièmes éléments 21 adaptés chacun pour contenir un composant statique adapté pour stocker une quantité déterminée de chaleur. Les deuxièmes éléments 21 sont positionnés de manière adjacente aux premiers éléments 20 afin de permettre un échange de chaleur entre le premier composant dynamique, se déplaçant à l'intérieur des premiers éléments 20, et le composant statique présent entre deux premiers éléments 20 adjacents. Par ailleurs, le composant statique peut être réalisé à l'aide de toute matière adaptée. Selon la présente invention, le composant statique comprend, par exemple, un matériau à changement de phase (MCP). Ce type de matériau est souvent indiqué à l'aide du terme anglais « phase changing material » ou PCM.

Le MCP, tel que représenté sur la figure 4, peut être sélectionné selon un premier critère relatif aux capacités du PCM à supporter une température de changement de phase se situant entre 70° et 90° et ce, dans le but de constituer une source chaude pour chauffer le premier composant dynamique tel que de l'huile. Le MCP permet de garantir une importante capacité de stockage de chaleur. Le MCP peut également être sélectionné selon un deuxième critère relatif au type de transfert de chaleur. En effet, le MCP doit permettre un transfert de chaleur latente. Le MCP comprend, par exemple, un eutectique offrant une chaleur latente de 391 kJ/m³.

Selon la figure 4, lors de la circulation d'un premier composant dynamique sous la forme d'un fluide, tel que de l'huile, à l'intérieur des premiers éléments 20 et lorsque la température dudit fluide est supérieure à celle du composant statique à l'intérieur des deuxièmes éléments 21, le fluide échange une quantité déterminée de chaleur avec les deuxièmes éléments 21 afin de transmettre et stocker ladite quantité déterminée de chaleur à l'intérieur desdits deuxièmes éléments 21 au sein du composant statique. Ainsi, les deuxièmes éléments 21 sont utilisés afin de retirer une quantité déterminée de chaleur du fluide présent à l'intérieur des premiers éléments 20 et de refroidir ainsi ledit fluide en mouvement à l'intérieur desdits premiers éléments 20. De façon simultanée, la quantité déterminée de chaleur, stockée à l'intérieur des deuxièmes éléments 21 au moyen du composant statique, est disponible pour être utilisée, de façon différée, afin de chauffer un fluide se déplaçant à l'intérieur des premiers éléments 20 lorsque ledit fluide présente une température inférieure à celle du composant statique à l'intérieur des deuxièmes éléments 21.

La zone comprenant des premiers éléments 20 adjacents à des deuxièmes éléments 21 correspond à une «zone de stockage de chaleur», telle qu'indiqué avec la référence A sur la figure 4. La zone A permet également de stocker une quantité déterminée de chaleur. Lorsque la température d'un fluide tel que de l'huile circulant à l'intérieur du deuxième échangeur de chaleur 2 est relativement basse, la zone A peut être utilisée pour augmenter rapidement la température de l'huile.

Comme indiqué sur la figure 4, le faisceau d'échange 12 est, de plus, pourvu d'éléments de refroidissement 22, 23 ou deuxièmes conduits 22, 23. Les éléments de refroidissement 22, 23 sont adaptés pour guider un deuxième composant dynamique, tel qu'un fluide, d'une entrée relative audit deuxième composant dynamique vers une sortie relative audit deuxième composant dynamique. Le deuxième composant dynamique peut se présenter, par exemple, sous la forme d'un fluide de type « eau glycolée ». Ce type de fluide est adapté et utilisé pour refroidir un fluide tel qu'une huile au sein d'un dispositif d'échange de chaleur. Les éléments de refroidissement 22, 23 peuvent être adaptés afin de permettre la circulation, à contre-courant, du premier composant dynamique par rapport au deuxième composant dynamique. Les éléments de refroidissement 22 et les premiers éléments 20 adjacents forment une zone B, telle que montrée sur la figure 4. De manière similaire, les éléments de refroidissement 23 et les premiers éléments 20 adjacents forment une zone C. Les zones B et C sont spécifiquement adaptées pour refroidir le premier composant dynamique au moyen du deuxième composant dynamique.

Ainsi, le deuxième échangeur de chaleur 2, tel que représenté sur la figure 4, est adapté pour exercer deux fonctions. La première fonction est de permettre le refroidissement d'un premier composant dynamique tel que de l'huile. Cette huile est, selon la présente invention, plus particulièrement l'huile de la boîte de vitesse automatique. La deuxième fonction du deuxième échangeur de chaleur 2 consiste à stocker une quantité déterminée de chaleur dans la zone A afin de rendre cette chaleur disponible à l'intérieur dudit deuxième échangeur de chaleur 2.

En fonction de la température de l'huile circulant à l'intérieur du deuxième échangeur de chaleur 2 selon la présente invention, l'huile peut être refroidie grâce aux zones A et/ou B et/ou C.

En faisant référence à la figure 4 et, au regard du fonctionnement des différentes zones A, B et C du faisceau d'échange 12 du deuxième échangeur de chaleur 2 et de la structure modulaire du faisceau d'échange 12, l'importance respective des différentes zones A, B et C peut être modifiée en fonction du nombre de plaques empilées.

La description relative au mode de réalisation du deuxième échangeur de chaleur 2, tel que décrit en faisant référence à la figure 4 peut être également s'appliquer pour obtenir le premier échangeur de chaleur 1. Le premier échangeur de chaleur 1 est particulièrement adapté pour refroidir un fluide tel que l'huile du circuit d'huile d'une boîte de vitesse automatique et peut aussi comporter les éléments nécessaires à la fonctionnalité permettant de stocker une quantité déterminée de chaleur.

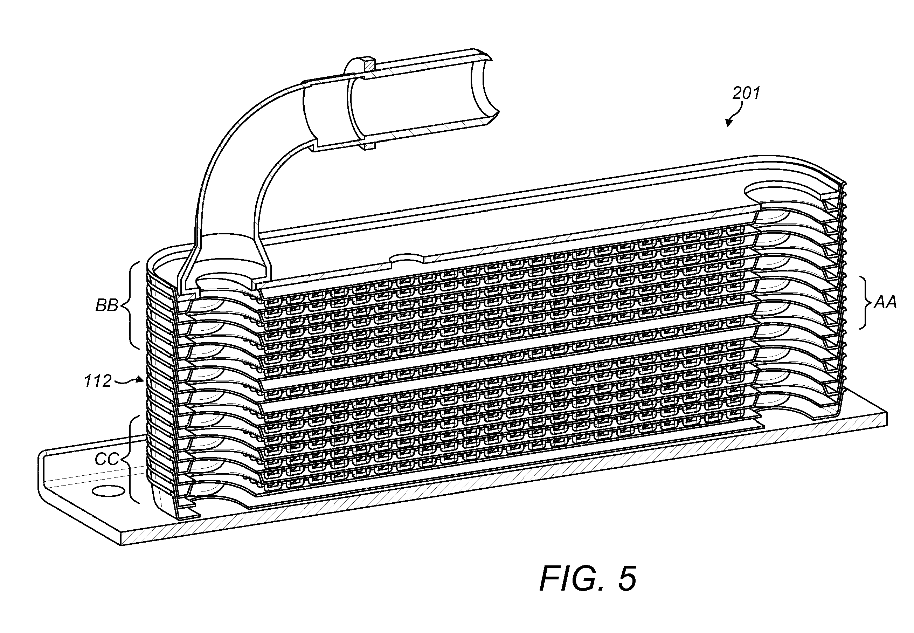

La figure 5 présente une vue, en perspective éclatée, d'un deuxième mode de réalisation du deuxième échangeur de chaleur 201. Selon la figure 5, le deuxième échangeur de chaleur 201 comprend une zone AA représentant 25% du volume effectif du faisceau d'échange 112. Les zones BB et CC occupent un volume effectif de 75% du faisceau d'échange 112 pour le refroidissement d'un premier composant dynamique. La capacité de fonctionnement des zones BB et CC correspond donc à ce volume effectif.

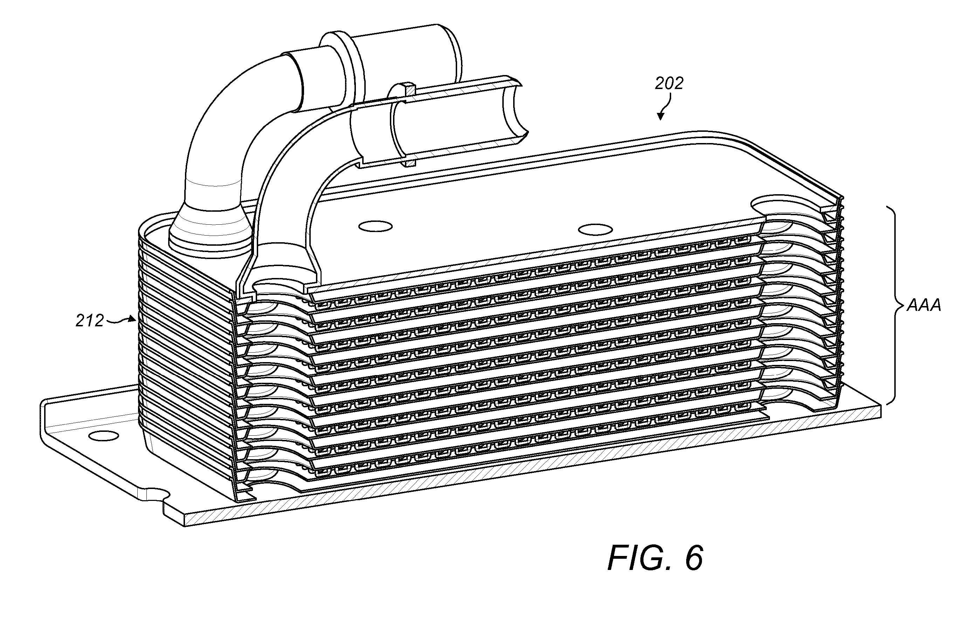

La figure 6 montre une vue, en perspective éclatée, , d'un troisième mode de réalisation du deuxième échangeur de chaleur 202 comprenant un faisceau d'échange 212 selon la présente invention. Le deuxième échangeur de chaleur 202, selon la figure 6, comprend une zone AAA représentant 100% du volume effectif du faisceau d'échange 212 du deuxième échangeur de chaleur 202. La capacité de fonctionnement de la zone AAA correspond donc à ce volume effectif.

En pratique, le dispositif d'échange de chaleur, comprenant un deuxième échangeur de chaleur 2, 201, 202 et éventuellement un premier échangeur de chaleur 1, selon les figures 3, 4, 5 et 6, est capable, lorsque que le moteur du véhicule fonctionne, de stocker une quantité de chaleur déterminée au sein dudit dispositif d'échange de chaleur. Pendant la phase d'augmentation de la température de l'huile, et plus particulièrement de l'huile de la boîte de vitesse automatique, lors d'un démarrage à froid, l'huile est de nouveau guidée à l'intérieur du dispositif d'échange de chaleur de l'entrée vers la sortie associée à l'huile. Le composant statique, présent à l'intérieur du dispositif d'échange de chaleur, est capable d'échanger de la chaleur avec le premier composant dynamique, plus particulièrement avec l'huile de moteur ou l'huile de la boîte de vitesse. Lors de cette phase d'augmentation de la température, le dispositif d'échange de chaleur n'est pas utilisé pour refroidir l'huile de moteur ou l'huile de la boîte de vitesse automatique comme généralement prévu dans l'art antérieur. En effet, le dispositif d'échange de chaleur est utilisé, selon la présente invention, pour permettre l'augmentation de la température de l'huile de moteur ou de l'huile de la boîte de vitesse automatique et ce, le plus rapidement possible.

En faisant référence aux observations ci-dessus, au sein de la présente invention, le dispositif d'échange de chaleur, selon l'art antérieur, nécessaire pour refroidir de l'huile, et en particulier l'huile de boîte de vitesse automatique, est donc modifié pour assurer une augmentation de la température de l'huile la plus rapide possible.

## Revendications

1. Dispositif d'échange de chaleur (5) pour échanger de la chaleur avec un fluide, ledit dispositif (5) comprenant un conteneur (11) et étant adapté pour échanger de la chaleur avec un fluide afin de refroidir ledit fluide, et ledit dispositif d'échange de chaleur (5) comprenant un premier échangeur de chaleur (1) comprenant au moins une première entrée (6) pour le fluide, et un deuxième échangeur de chaleur (2, 201, 202) positionné au sein du conteneur (11) comprenant un composant statique pour échanger de la chaleur avec le fluide, le composant statique étant adapté pour stocker et libérer une quantité déterminée de chaleur afin de permettre un échange de chaleur entre le fluide et le composant statique, le deuxième échangeur de chaleur (2, 201, 202) comprenant au moins une deuxième entrée (8) pour ledit fluide, le dispositif d'échange de chaleur (5) comprenant des moyens de régulation (15) permettant de réguler la quantité de fluide transmise vers la première entrée (6) du premier échangeur de chaleur (1) et la deuxième entrée (8) du deuxième échangeur de chaleur (2, 201, 202).

2. Dispositif d'échange de chaleur (5) selon la revendication 1, dans lequel le premier et le deuxième échangeurs de chaleur (1, 2, 201, 202) sont positionnés au sein du dispositif d'échange de chaleur (5) et sont séparés par un élément d'isolation (3).

3. Dispositif d'échange de chaleur (5) selon la revendication 1 ou 2, dans lequel le conteneur (11) comprend une paroi extérieure isolée.

4. Dispositif d'échange de chaleur (5) selon la revendication 3, dans lequel la paroi extérieure isolée du conteneur (11) comprend un premier et un deuxième élément séparés par un espace vide.

5. Dispositif d'échange de chaleur (5) selon l'une des revendications 1 à 4, dans lequel le deuxième échangeur de chaleur (2, 201, 202) comprend un faisceau d'échange (12, 112, 212) comprenant au moins un premier conduit (20) pour guider un premier composant dynamique d'une première entrée vers une première sortie, le composant statique étant adjacent audit premier conduit et positionné à l'intérieur dudit faisceau d'échange (12, 112, 212), ledit composant statique étant adapté pour stocker et libérer une quantité déterminée de chaleur afin de permettre un échange de chaleur entre le premier composant dynamique et le composant statique.

6. Dispositif d'échange de chaleur (5) selon la revendication 5, dans lequel le premier composant dynamique comprend un fluide.

7. Dispositif d'échange de chaleur (5) selon la revendication 5, dans lequel le composant statique comprend un matériau à changement de phase (MCP).

8. Dispositif d'échange de chaleur (5) selon la revendication 7, dans lequel la température de changement de phase du matériau à changement de phase (MCP) est comprise entre 60°C et 95°C, préférablement entre 70°C et 90°C.

9. Dispositif d'échange de chaleur (5) selon la revendication 7 ou 8, dans lequel le matériau à changement de phase comprend un eutectique.

10. Dispositif d'échange de chaleur (5) selon l'une des revendications 5 à 9, dans lequel le faisceau d'échange (12, 112, 212) comprend au moins un deuxième conduit (22, 23) pour guider un deuxième composant dynamique d'une deuxième entrée vers une deuxième sortie, ledit deuxième conduit (22, 23) étant adjacent au premier conduit (20) pour guider le premier composant dynamique de la première entrée vers la première sortie, et positionné à l'intérieur du faisceau d'échange (12, 112, 212) pour permettre un échange de chaleur entre le premier composant dynamique et le deuxième composant dynamique.

11. Dispositif d'échange de chaleur (5) selon la revendication 10, dans lequel lesdits premier et deuxième conduits (20, 22, 23) pour guider respectivement le premier composant dynamique et le deuxième composant dynamique sont positionnés pour permettre une circulation du premier composant dynamique à contre-courant de la circulation du deuxième composant dynamique.

12. Dispositif d'échange de chaleur (5) selon l'une des revendications 5 à 11, dans lequel le faisceau d'échange de chaleur (12, 112) comprend une première zone (A ; AA) pour permettre l'échange de chaleur entre le premier composant dynamique et le composant statique, et une deuxième zone (B, C ; BB ; CC) pour permettre l'échange de chaleur entre le premier composant dynamique et le deuxième composant dynamique.

13. Dispositif d'échange de chaleur (5) selon l'une des revendications précédentes, dans lequel le deuxième échangeur de chaleur (2, 201, 202) comprend un faisceau d'échange (12, 112, 212) comprenant au moins un premier conduit (20) pour guider le premier composant dynamique d'une première entrée vers une première sortie, le composant statique adjacent audit premier conduit (20) étant positionné à l'intérieur dudit faisceau d'échange (12, 112, 212), ledit composant statique étant adapté pour stocker et libérer une quantité déterminée de chaleur afin de permettre un échange de chaleur entre le premier composant dynamique et le composant statique, dans lequel le faisceau d'échange (12, 112, 212) comprend au moins un deuxième conduit (22, 23) pour guider un deuxième composant dynamique d'une deuxième entrée vers une deuxième sortie, ledit deuxième conduit (22, 23) étant adjacent au premier conduit (20) pour guider le premier composant dynamique de la première entrée vers la première sortie et positionné à l'intérieur dudit faisceau d'échange (12, 112, 212) pour permettre un échange de chaleur entre le premier et le deuxième composant dynamique.
